## Europäisches Patentamt

## European Patent Office

## Office européen des brevets

(11) Veröffentlichungsnummer: **0 116 328**
**B1**

(12) **EUROPÄISCHE PATENTSCHRIFT**

(45) Veröffentlichungstag der Patentschrift:
25.01.89

(21) Anmeldenummer: **84100892.3**

(22) Anmeldetag: **27.01.84**

(51) Int. Cl.⁴: **B 65 D 81/20,** B 65 D 75/26

(54) **Behälter zur druckdichten Verpackung von Tennisbällen und dergleichen.**

(30) Priorität: **10.02.83 DE 3304590**

(43) Veröffentlichungstag der Anmeldung:
**22.08.84 Patentblatt 84/34**

(45) Bekanntmachung des Hinweises auf die Patenterteilung:
**25.01.89 Patentblatt 89/4**

(84) Benannte Vertragsstaaten:
**AT BE CH DE FR GB IT LI LU NL SE**

(56) Entgegenhaltungen:
DE-A-2 920 456
GB-A-1 238 276
US-A-2 430 459
US-A-2 635 742
US-A-4 124 117

(73) Patentinhaber: **Dunlop GmbH, Dunlopstrasse 2, D-6450 Hanau (DE)**

(84) Benannte Vertragsstaaten:
**BE CH DE IT LI LU NL SE AT**

(73) Patentinhaber: **DUNLOP LIMITED, 2 Parade, Sutton Coldfield (GB)**

(84) Benannte Vertragsstaaten: **FR GB**

(72) Erfinder: **Heitzenröder, Hans F., Dipl.- Ing., Rhönstrasse 53, D-6456 Langenselbold (DE)**
Erfinder: **Wachter, Ernst, Dipl.- Ing., Grüner Weg 5, D-6450 Hanau (DE)**
Erfinder: **Bitsch, Kurt, Hintergasse 10, D-6456 Langenselbold (DE)**

(74) Vertreter: **Dipl.- Phys.Dr. Manitz Dipl.- Ing., Dipl.- Wirtsch. Finsterwald Dipl.- Ing. Grämkow Dipl.- Chem.Dr. Heyn Dipl.- Phys. Rotermund, Morgan, B.Sc.(Phys.) Robert- Koch- Strasse 1, D-8000 München 22 (DE)**

LIBER, STOCKHOLM 1989

## Beschreibung

Die Erfindung betrifft einen Behälter zur druckdichten und unter Überdruck erfolgenden Verpackung von Tennisbällen und dergleichen.

Ein derartiger Behälter ist beispielsweise in der US-A-4 124 117 beschrieben. Für die Lagerung oder Versendung bestimmter Güter ist es oft zweckmäßig oder erforderlich, diese Güter in unter Überdruck stehenden Behältern zu verpacken. Beispielsweise verlieren Tennisbälle, wenn sie nicht unter Druck aufbewahrt werden, an Innendruck und damit an Sprungelastizität. Aus diesem Grunde werden Tennisbälle heutzutage bevorzugt in Behältern, wie beispielsweise Dosen, mit gegenüber dem atmosphärischen Druck überhöhtem Innendruck aufbewahrt.

Die Verpackung von Tennisbällen in Dosen liefert zwar im Hinblick auf eine druckdichte Verpackung zufriedenstellende Ergebnisse, sie ist jedoch relativ aufwendig und mit hohen Kosten verbunden und verbietet somit bereits aus rein wirtschaftlichen Gründen eine Verpackung einer kleineren Anzahl von Bällen oder einzelner Bälle.

Es sind auch aus Kunststoffolien hergestellte Behälter bekannt. Derartige Behälter weisen jedoch Mängel insbesondere im Hinblick auf die Gasundurchlässigkeit und/oder die Festigkeit von Schweißnähten auf.

Zur Verpackung unterschiedlichster Gegenstände ist auch die Verwendung von Aluminiumfolien bekannt, wobei jedoch aus Gründen der Festigkeit zur Verpackung von Gegenständen in einem unter Druck gesetzten Behälter eine sehr dicke Folie erforderlich ist. Eine solche Folie ist teuer, nicht mehr ausreichend flexibel und somit nur schwer an die jeweilige Form der zu verpackenden Gegenstände anpaßbar. Der Einsatz derartiger Aluminiumfolien mit der erforderlichen Stärke würde nahezu wieder der Verwendung einer Dose gleichkommen.

Bei Behältern für Tennisbälle ist zu beachten, daß sie innen einen Überdruck aufweisen. Nur durch die Aufrechterhaltung eines solchen Überdrucks kann zuverlässig ein Druckverlust der Bälle verhindert werden.

Infolge des im Behälterinneren vorherrschenden Überdrucks entstehen bei Behältern der beanspruchten Gattung demnach Probleme ganz besonderer Art. Der beträchtliche Innendruck tendiert stets dazu, die Schweißnähte auseinander zu ziehen. Durch äußere Einwirkungen wie beispielsweise durch Preßvorgange oder Stöße bei der Lagerung und dem Transport wird diese Gefahr des unerwünschten Öffnens zusätzlich noch erhöht.

Aus der US-A-2 635 742 geht eine Mehrschichtverpackung mit einer Metallschicht und einer Polyesterschicht hervor, die überlappende und nicht überlappende hitzeversiegelte Nähte aufweist. Eine Verpackung der betreffenden Gegenstände bzw. Flüssigkeiten unter Überdruck ist nicht vorgesehen. In der GB-A-1 238 276 ist eine Verpackung beschrieben, bei der auf der Innenseite eine verschweißbare Schicht vorgesehen ist.

Der Erfindung liegt die Aufgabe zugrunde, einen Behälter der eingangs genannten Art zu schaffen, der aus möglichst preiswertem Material auf möglichst einfache Weise herstellbar ist, eine gute Gasdichtigkeit und Druckfestigkeit sowie eine ausreichende Stabilität für Lagerung und Versand besitzt. Ferner soll ein solcher Behälter problemlos handhabbar und insbesondere leicht zu öffnen sein.

Die Aufgabe wird nach der Erfindung dadurch gelöst, daß die Verpackung aus einer zumindest im wesentlichen der Form der zu verpackenden Tennisbälle angepaßten und über Schweißnähte verschlossenen Mehrschichtfolie besteht, die wenigstens eine Schicht aus gasundurchlässigem Material und wenigstens eine Schicht mit einer zumindest dem Behälterinnendruck standhaltenden Festigkeit umfaßt, daß die die Behälterinnenfläche und die Behälteraußenfläche bildenden Schichten schweißbar sind, und daß wenigstens ein Teil der Schweißnähte ohne Überlappung durch Verschweißen der Behälterinnenflächen gebildet ist und diese nicht überlappenden Schweißnähte auf den Behälterkörper zurückgefaltet und am Behälterkörper anliegend festgelegt sind.

Mit einer solchen Ausbildung der Behälter kann auf überraschend einfache Weise der bei einer druckdichten und unter Überdruck erfolgenden Verpackung auftretenden besonderen Problematik in vollem Umfange Rechnung getragen werden. Die überlappenden Schweißnähte können mit den nicht überlappenden Schweißnähten derart kombiniert werden, daß einerseits die Herstellung der Behälter in unkomplizierter Weise möglich ist, durch das Zurückfalten und Anlegen der nicht überlappenden Schweißnähte am Behälterkörper andererseits aber sichergestellt wird, daß auf diese kritischen, nicht überlappenden Schweißnähte praktisch keine zu einem Aufziehen dieser Nähte führenden Kräfte ausgeübt werden können. Die überlappenden Schweißnähte sind ausreichend stabil, da sie nur auf Schub beansprucht werden und dabei keine Tendenz zum Aufziehen erhalten.

Schließlich wird auch ein äußerst wirtschaftlicher, allen Anforderungen hinsichtlich der Gasundurchlässigkeit, der Festigkeit und der Schweißbarkeit des Verpackungsmaterials gerecht werdender Behälter für unter Druck stehende Tennisbälle und die gleichen, geschaffen.

Durch die gezielte Zuordnung von bestimmten Funktionen an die einzelnen Teilschichten (Gasundurchlässigkeit, Festigkeit und Verschweißbarkeit) können die einzelnen Schichten jeweils optimal eingesetzt bzw. in ihrer Stärke dimensioniert werden, so daß sich insgesamt ein vergleichsweise preiswertes und im Hinblick auf den eigentlichen Verpackungsvorgang äußerst problemfreies Gesamtmaterial mit in der Summe sehr positiven Eigenschaften ergibt.

Von Vorteil ist ferner, daß die Folienstärke hierbei relativ klein gehalten werden kann. Die Mehrschichtfolie kann durch gezielte Dimensionierung der entsprechenden Schichten so ausgelegt werden, daß die Verpackung problemlos zumindest teilweise an die Form der jeweils zu verpackenden Gegenstände angepaßt werden kann, andererseits jedoch genügend Festigkeit besitzt, um zumindest dem Behälterinnendruck und den beispielsweise während des Transports des Behälters auftretenden Belastungen Stand zu halten.

Eine möglichst optimale Abstimmung der einzelnen Schichten im Hinblick auf die sich bei einer druckdichten und unter Überdruck erfolgenen Verpackung ergebenen Anforderungen wird weiter dadurch erleichtert, daß zwischen den die Behälterinnenfläche und die Behälteraußenfläche bildenden schweißbaren Schichten die gasundurchlässige Schicht und wenigstens eine zumindest dem Behälterinnendruck standhaltende Festigkeit aufweisende weitere Schicht vorgesehen ist. Durch die Verwendung getrennter Schichten einerseits aus festigkeitsgebendem Material und andererseits aus schweißbarem Material ist die Dimensionierung der Mehrschichtfolie hinsichtlich der beiden Eigenschaften Festigkeit und Schweißbarkeit äußerst problemlos. Grundsätzlich ist jedoch auch eine teilweise Verringerung der Schichtenzahl denkbar, indem beispielsweise eine Schicht gleichzeitig gute Festigkeits- und Schweißeigenschaften aufweist.

Die schweißbaren Schichten der Mehrschichtfolie sind zweckmäßigerweise Schichten, die den Schweißnähten bereits bei einer Temperatur, die geringfügig unterhalb der für das Schweißen erforderlichen Erweichungstemperatur liegt, eine hohe Festigkeit verleihen. Aufgrund des Vorliegens eines möglichst guten sogenannten hot-tack wird somit erreicht, daß längere Abkühlungszeiten unter Pressung der betreffenden Nähte nicht erforderlich sind.

Die auf den Behälterkörper zurückgefalteten, nicht überlappenden Schweißnähte können beispielsweise durch wenigstens ein Band oder einen Klebestreifen festgelegt sein.

Mit der Verwendung von nicht überlappenden Schweißnähten ist das Öffnen des Behälters aufgrund der relativ geringen Festigkeit dieser Schweißnähte beträchtlich vereinfacht. Dadurch, daß diese Schweißnähte auf den Behälterkörper zurückgefaltet und beispielsweise durch das Band vollständig am Behälterkörper anliegend festgelegt sind, können sie dennoch dem Behälterinnendruck sowie den auf den Behälter einwirkenden Belastungen standhalten. Während somit bei zurückgefalteten und am Behälterkörper festgelegten Schweißnähten stets eine druckdichte Verpackung gewährleistet ist, kann beispielsweise nach Abnahme des Bandes bereits durch leichten Druck auf die Verpackung und die damit verbundene Druckerhöhung in der Verpackung die Schweißnaht geöffnet werden.

Der Behälter ist vorteilhafterweise durch wenigstens eine Längsschweißnaht und an den beiden Enden jeweils durch eine Querschweißnaht verschlossen, wobei die durch Verschweißen der Behälterinnenflächen gebildeten, keine Überlappung aufweisenden Querschweißnähte auf dem Behälterkörper zurückgefaltet und durch ein Band, einen Klebestreifen oder dergleichen festgelegt sind. Die Längsschweißnaht ist zweckmäßigerweise eine überlappende Naht.

Zur Herstellung einer Verpackung für Tennisbälle kann in diesem Falle beispielsweise ein schmaler Streifen der Mehrschichtfolie durch Verschweißen längs einer Längsnaht zu einem langen, schlauchförmigen Gebilde geformt werden. Von diesem Schlauch werden nun Stücke mit einer der Anzahl der zu verpackenden Tennisbälle entsprechenden Länge abgeschnitten. Nun kann man entweder ein Ende des Schlauchs verschweißen, dann die Bälle einlegen und danach das andere Ende verschweißen. Es können jedoch auch zuerst die Bälle in das Schlauchstück eingelegt und dann beide offenen Enden gleichzeitig verschweißt werden. Die Erzeugung von Überdruck in der Verpackung kann nach dem Verschließen erfolgen, z. B. über Ventile oder nachträglich zu verschließende Öffnungen. Es kann jedoch auch vor dem Verschließen zusammen mit den Tennisbällen beispielsweise eine gasbildende Tablette in den Behälter eingelegt werden, die nach Verschließen des Behälters den gewünschten Überdruck erzeugt. Es ist auch denkbar, den Behälter in einer unterkühlten Gasatmosphäre bei atmosphärischem Druck zu verschließen, worauf sich der gewünschte Behälterinnendruck durch eine anschließende Erwärmung des Behälters durch die Umgebungstemperatur einstellt.

Das Prinzip des Zurückfaltens und Festlegens der Quernähte ist grundsätzlich auch bei Verpackungen anwendbar, die keine Längsnaht aufweisen, d. h. z. B. bei einem durch Strangpressen hergestellten nahtlosen Schlauch, bei dem dann nur noch Quernähte zu verschließen wären.

Eine durch eine überlappende Verbindung der beiden Randteile der Mehrschichtfolie erhaltene Längsschweißnaht ist relativ flexibel und kann sich den Faltvorgängen besser anpassen. Aufgrund dieser Überlappungsverbindung ist die Längsnaht auch ausreichend fest und braucht nicht durch einen Klebestreifen oder dergleichen gesichert zu werden.

Beispielsweise wird ein Band bevorzugt um den ganzen Behälterkörper gewickelt, so daß die Gefahr einer unbeabsichtigten Lösung dieses Bandes und somit einer Öffnung des Behälters auch bei größeren Belastungen nicht gegeben ist.

Das Band kann zum Öffnen des Behälters zweckmäßigerweise eine Aufreißhilfe aufweisen. Diese Aufreißhilfe kann beispielsweise eine Reißnaht mit einem geeigneten Reißorgan sein. Es ist beispielsweise auch denkbar, das Band bzw. den Klebestreifen an den Enden jeweils umzufalten, so daß die Enden nicht am Behälterkörper haften und das Band an diesen Enden vom Behälter abgezogen werden kann.

Eine besonders vorteilhafte Ausführungsvariante besteht darin, daß wenigstens ein Teil der durch Verschweißen der Behälterinnenflächen gebildeten nicht überlappenden Schweißnähte jeweils derart ausgelegt ist, daß diese Schweißnähte dem Behälterinnendruck jeweils nur mit Unterstützung des Bandes standhalten und sich bei Abzug des Bandes ohne weitere Manipulation öffnen.

Während beim letzten Ausführungsbeispiel der Behälter entlang einer nicht überlappenden Schweißnaht, insbesondere einer stirnseitigen Querschweißnaht des länglichen Behälters, geöffnet und die im Behälter aufgenommenen Gegenstände stirnseitig aus dem Behälter herausgenommen bzw. herausgedrückt werden, ist es je nach Art der verpackten Gegenstände oft zweckmäßig, dafür zu sorgen, daß sich der Behälter entlang einer Längsseite öffnen läßt. Hierzu ist gemäß einer weiteren vorteilhaften Ausführungsvariante vorgesehen, daß wenigstens eine der nicht überlappenden Querschweißnähte und zumindest eine überlappende Längsschweißnaht eine zusammenhängende, zumindest im wesentlichen in einer Ebene liegende Naht bilden und daß in dieser Querschweißnaht wenigstens eine vorzugsweise im Bereich einer angrenzenden Längsschweißnaht angeordnete Einreißhilfe vorgesehen ist, die insbesondere aus einer Materialschwächung oder Einkerbung besteht, die sich vorzugsweise über die halbe Breite der Querschweißnaht erstreckt.

Hierbei wird zunächst das die Einreißhilfe, beispielsweise eine Einkerbung, aufweisende Ende der Querschweißnaht durch Abziehen des Klebebandes freigelegt. Nachdem sich das die Einkerbung aufweisende Ohr der Schweißnaht aufgrund des Behälterinnendrucks aufgerichtet hat, kann nach dem Einreißen der Querschweißnaht im Bereich der Kerbe durch Ziehen am Ohr und dem Entlüften der Packung durch Weiterziehen an diesem Ohr die Packung geöffnet werden, da die Packung dabei an beiden Seiten der Längsnaht praktisch wie bei einer Sollbruchstelle aufreißt. Sie wird somit in voller Länge geöffnet, so daß die Gegenstände leicht entnommen werden können.

Vorzugsweise sind die beiden Enden zumindest der die Einreißhilfe aufweisenden Querschweißnaht auf die betreffende Stirnfläche des länglichen Behälters zurückgefaltet und an diesem anliegend festgelegt.

Aufgrund dieser Ausbildung wird sichergestellt, daß die beiden Ohren bzw. Zipfel der betreffenden Querschweißnaht beispielsweise durch das Band auch bei höherem Behälterinnendruck stets zuverlässig am Behälterkörper anliegend festgelet werden und die Eigenspannung der Enden bzw. Ohren der Querschweißnaht nicht dazu führen kann, daß sich das Klebeband vorzeitig ablöst.

Die Längsschweißnaht ist vorteilhafterweise stirnseitig mittig gefaltet, so daß sie einen verstärkten Abschnitt der Querschweißnaht bildet. Dadurch ist praktisch eine genaue Sollbruchstelle beidseitig der Längsschweißnaht festgelegt.

Eine weitere vorteilhafte Ausbildung des Behälters besteht darin, daß das ohne Einreißhilfe ausgebildete, auf die Stirnfläche zurückgefaltete Ende der Querschweißnaht zusätzlich und unabhängig von dem Band an der Stirnfläche festgelegt ist, daß das mit der Einreißhilfe versehene Ende festlegt.

Nach dem Abziehen des dem die Einreißhilfe aufweisenden Ohr zugeordneten Bandes richtet sich nicht die ganze Querschweißnaht, sondern lediglich der die Einreißhilfe aufweisende Zipfel dieser Naht auf, so daß aufgrund des noch am Behälterkörper festgelegten Abschnitts der Querschweißnaht diese Querschweißnaht auch bei höhrem Behälterinnendruck noch verschlossen bleibt. Der Behälter wird erst mit dem Einreißen der Naht im Bereich der Einkerbung langsam und lautlos entlüftet.

Wird nach dem Entlüften des Behälters am die Einreißhilfe aufweisenden Ohr der Querschweißnaht weiter gezogen, so öffnet sich der Behälter längs der sich zu beiden Seiten der Längsschweißnaht ergebenden Sollbruchstellen, während die Querschweißnaht im allgemeinen zumindest im noch am Behälterkörper festgelegten Bereich verschlossen bleibt.

Zweckmäßigerweise ist das ohne Einreißhilfe ausgebildete Ende der Querschweißnaht durch Verschweißung, einen Kleber und/oder ein weiteres, insbesondere sich quer zur Querschweißnaht erstreckendes Band an der Stirnfläche des Behälters festgelegt.

Das Band, das das mit der Einreißhilfe versehene Ende der Querschweißnaht an der Stirnfläche festlegt, erstreckt sich vorzugsweise längs der Querschweißnaht über die gesamte Stirnfläche und zumindest teilweise längs wenigstens einer der beiden Seiten des Behälters.

Zum Öffnen des Behälters wird nun dieses Band im allgemeinen lediglich so weit abgezogen, bis sich das die Einreißhilfe aufweisende Ohr der Querschweißnaht aufgerichtet hat. Durch die zusätzliche Fixierung des anderen Ohres des Querschweißnaht ist jedoch sichergestellt, daß auch bei weiterem Abziehen des das mit der Einreißhilfe versehene Ende festlegenden Bandes bzw. bei einem vollständigen Abziehen dieses Bandes das andere Ohr der Querschweißnaht weiterhin an der betreffenden Stirnfläche des Behälters anliegenden festgelegt bleibt, so daß sich stets nur das die Einreißhilfe aufweisende Ohr der Querschweißnaht aufrichtet und der Behälter erst mit dem Einreißen im Bereich der Einreißhilfe entlüftet wird.

Die Erfindung wird im folgenden anhand von Ausführungsbeispielen unter Bezugnahme auf die Zeichnung näher erläutert; in dieser zeigt:

Fig. 1 eine perspektivische Ansicht einer ersten Ausführungsform eines Behälters zur druckdichten Verpackung von Tennisbällen vor dem Einfüllen der Tennisbälle,

Fig. 2 eine Querschnittsansicht einer Mehrschichtfolie, aus der der Behälter gebildet ist,

Fig. 3 einen Längsschnitt des Behälters, wobei der Behälter jedoch bereits gefüllt und die beiden Behälterenden verschlossen sind,

Fig. 4 eine Draufsicht des Behälters in seiner endgültigen Form mit seitlich auf den Behälterkörper zurückgefalteten und durch ein Band festgelegten Querschweißnähten,

Fig. 5 eine perspektivische Ansicht einer zweiten Ausführungsform des Behälters, bei dem das den Deckel bildende Ende bereits verschlossen ist, sowie eine Teilansicht dieses Deckelverschlusses,

Fig. 6 eine Teilansicht des mit einer Einkerbung versehenen Deckelverschlusses,

Fig. 7 eine Stirnansicht des bereits gefüllten Behälters gemäß Fig. 5 und 6, bei dem bereits ein Ende der deckelseitigen Querschweißnaht am Behälterkörper festgelegt ist und

Fig. 8 eine perspektivische Teilansicht des Behälters gemäß den Fig. 5 bis 7 in seiner endgütigen Form mit auf die Stirnfläche zurückgefalteten und durch zwei Bänder festgelegten Enden der deckelseitigen Querschweißnaht.

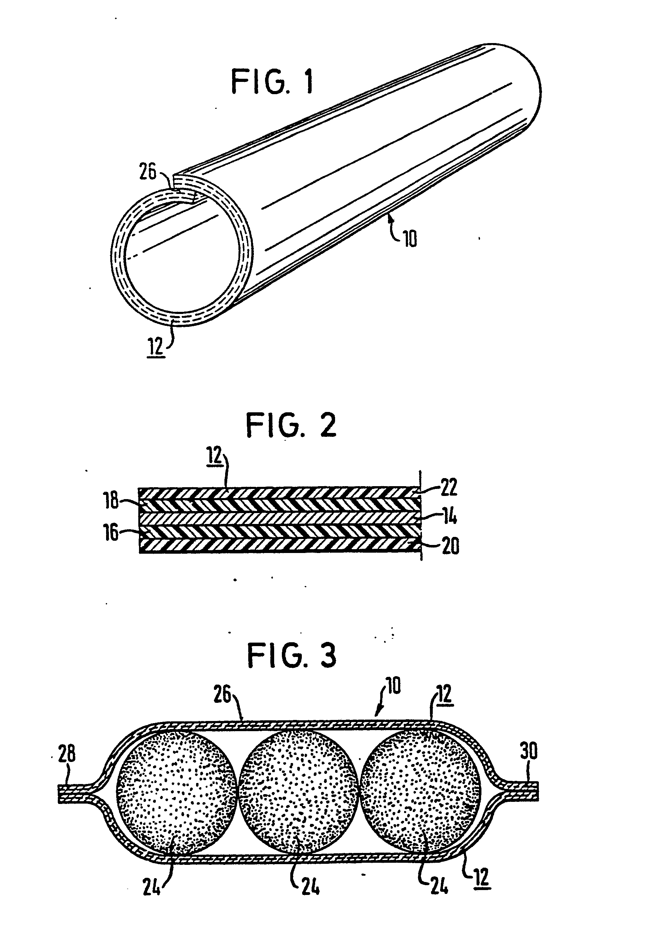

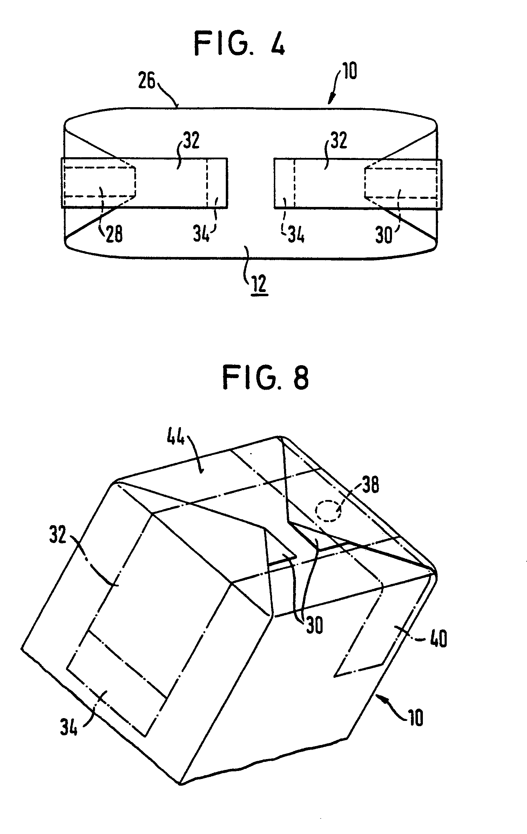

In den Fig. 1, 3 und 4 ist eine erste Ausführungsform eines Behälters 10 zur druckdichten Verpackung von Tennisbällen 24 gezeigt, der aus einer Mehrschichtfolie 12 (siehe insbesondere Fig. 2) gebildet ist. In Fig. 1 ist der Behälter 10 in der Form dargestellt, die er vor dem Einfüllen der Tennisbälle und vor dem Verschließen seiner beiden Enden aufweist. In der Darstellung gemäß Fig. 3 ist der Behälter 10 bereits gefüllt und an seinen beiden Enden verschlossen. In der Darstellung gemäß Fig. 4 ist der Behälter 10 in der endgültigen Form gezeigt, in der er zur Lagerung bzw. Versendung bereitgestellt wird.

In den Figuren sind einander entsprechenden Teilen jeweils gleiche Bezugszeichen zugeordnet.

Die Mehrschichtfolie 12, aus der der Behälter 10 hergestellt ist, umfaßt eine mittlere Schicht 14 aus gasundurchlässigem Material, z. B. Aluminium, zu beiden Seiten dieser gasundurchlässigen Schicht 14 jeweils eine Schicht 16, 18 aus einem dem Körper die erforderliche Festigkeit verleihenden Material, z. B. Polyester, sowie auf der die Behälterinnenfläche bildenden Seite und auf der die Behälteraußenfläche bildenden Seite jeweils eine Schicht 20, 22 aus schweißbarem Material, z. B. Polyäthylen (Fig. 2).

Den einzelnen Teilschichten der Mehrschichtfolie 12 sind somit jeweils bestimmte Funktionen wie Gasundurchlässigkeit, Festigkeit und Verschweißbarkeit zugeordnet. Die Stärke der jeweiligen Schichten sind derart dimensioniert, daß sich im Hinblick auf Gasundurchlässigkeit, Festigkeit und Verschweißbarkeit insgesamt ein optimales Behältermaterial ergibt. Die Folienstärke kann hierbei relativ klein gehalten werden.

Zur Herstellung des Behälters 10 wird zunächst ein schmaler Streifen der Mehrschichtfolie 12 durch Verschweißen längs einer überlappenden Längsnaht 26 zu einem langen schlauchförmigen Gebilde geformt. Von diesem Schlauch werden nun Stücke mit einer der Anzahl der jeweils zu verpackenden Tennisbälle 24 entsprechenden Länge abgeschnitten (Fig. 1).

Der Behälter 10 wird nun an seinen beiden Enden durch jeweils eine Querschweißnaht 28, 30 verschlossen, die durch Verschweißen der Behälterinnenflächen erhalten werden (Fig. 3). Man kann nun beispielsweise zunächst ein Ende des Behälters 10 verschweißen, dann die Tennisbälle 24 einlegen und danach das andere Ende verschweißen. Es ist jedoch auch möglich, zuerst die Tennisbälle in den Behälter einzulegen und dann beide offenen Enden gleichzeitig zu verschweißen.

Die Erzeugung des erforderlichen Behälterinnendrucks kann nach dem Verschließen des Behälters erfolgen, z. B. über Ventile oder nachträglich zu verschließende Öffnungen (nicht gezeigt). Zweckmäßiger ist es jedoch, zusammen mit den Tennisbällen eine gasbildende Tablette in den Behälter einzulegen, worauf sich nach Verschließen des Behälters der gewünschte Überdruck einstellt. Der Behälter kann aber auch in einer unterkühlten Gasatmosphäre bei atmosphärischem Druck verschlossen werden, worauf sich der höhere Innendruck aufgrund einer Erwärmung des Behälters durch die Umgebungstemperatur einstellt.

Im vorliegenden Fall werden drei Tennisbälle 24 verpackt. Die Verwendung eines derartigen Behälters ist jedoch auch bei der Verpackung von einzelnen Tennisbällen durchaus noch wirtschaftlich.

Nach dem Verschließen des Behälters 12 werden die beiden jeweils ohne Überlappung der entsprechenden Mehrschichtfolienränder hergestellten Querschweißnähte 28, 30 auf den Behälterkörper zurückgefaltet und durch wenigstens ein Band 32, einen Klebestreifen oder dergl. am Behälterkörper anliegend festgelegt (Fig. 4). Da der Behälter durch die Tennisbälle eine im wesentlichen zylindrische Gestalt annimmt, ergibt sich ein relativ komplizierter Übergang zu den Querschweißnähten. Diese Querschweißnähte behalten ihre volle Länge, die demnach größer als der Durchmesser des zylinderförmigen Behälterkörpers ist. Das Falten der die Querschweißnähte aufweisenden Behälterenden muß also mehrdimensional erfolgen. Wie in Fig. 4 zu erkennen ist, liegen die Querschweißnähte 28, 30 schließlich sowohl an der jeweiligen Stirnfläche als auch auf zwei einander gegenüberliegenden Seitenflächen des Behälters an.

Das Band 32 ist in Richtung der nichtüberlappenden und auf den Behälterkörper zurückgefalteten Querschweißnähte 28, 30 auf dem Behälterkörper angebracht und erstreckt sich im wesentlichen um den ganzen Behälterkörper. Das Band 32 ist etwas breiter als die Querschweißnähte, so daß diese vom Band völlig überdeckt werden. Das Band kann sich jedoch auch über im wesentlichen die gesamte Breite des Behälters erstrecken.

Die durch Verschweißen der Behälterinnenflächen gebildeten nichtüberlappenden Querschweißnähte 28, 30 sind nun jeweils derart ausgelegt, daß sie dem Behälterinnendruck nur mit Unterstützung des Bandes 32 standhalten und sich bei Abzug des Bandes ohne weitere Manipulation bzw. bereits bei leichtem, auf den Behälter ausgeübten Druck öffnen. Durch die Festlegung der beiden Querschweißnähte an den Enden der schlauchförmigen Verpackung verringern sich somit die Ansprüche an deren Festigkeit, was zu einer erheblichen Erleichterung beim Öffnen führt.

In diesem Falle ist natürlich darauf zu achten, daß sich der gewünschte Behälterinnendruck erst nach der Festlegung der Querschweißnähte am Behälterkörper durch das Band 32 einstellt.

Beim gezeigten Ausführungsbeispiel schneidet die Längsschweißnaht 26 die beiden Querschweißnähte 28, 30 etwa in deren Mitte unter einem rechten Winkel. Dadurch wird sowohl die Herstellung der Querschweißnähte als auch das Falten der Behälterendbereiche erleichtert. Aufgrund der Überlappungsverbindung ist die Längsschweißnaht 26 ausreichend fest und braucht nicht durch einen Klebestreifen gesichert zu werden.

Die Längsschweißnaht 26 ist ferner durch diese Überlappungsverbindung flexibler und kann sich den Faltvorgängen besser anpassen.

Da das Band 32 in Richtung der Querschweißnähte verlegt ist, liegen damit automatisch auch deren Ecken am Behälterkörper an.

Beim vorliegenden Ausführungsbeispiel weist das die Querschweißnähte 28, 30 festlegende Band 32 eine Aufreißhilfe 34 auf. Diese Aufreißhilfe wird auf einfache Weise dadurch erhalten, daß die Bandenden umgefaltet sind und somit nicht am Behälterkörper haften, so daß das Band über diese Enden vom Behälterkörper bequem abgezogen werden kann. Als Abreißhilfe kann jedoch auch eine Schlaufe oder dergl. vorgesehen sein.

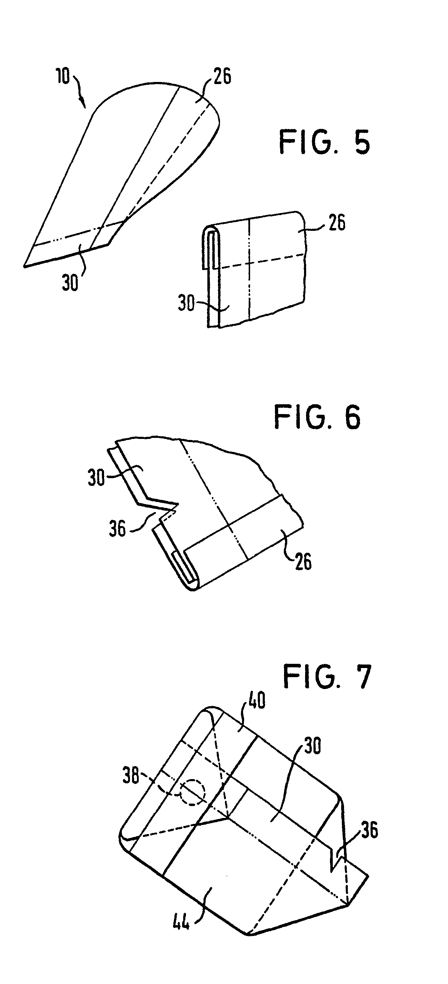

In den Fig. 5 bis 8 ist eine weitere Ausführungsform des Behälters 10 gezeigt, der ebenso wie der in den Fig. 1, 3 und 4 beschriebene Behälter wiederum aus einer solchen Mehrschichtfolie 12 gebildet sein kann, wie sie im Zusammenhang mit Fig. 2 beschrieben wurde. In Fig. 5 ist der Behälter in der Form dargestellt, die er nach Herstellen der Längsschweißnaht 26 sowie der am den Deckel bildenden Ende vorliegenden Querschweißnaht 30 aufweist. Im unteren rechten Abschnitt der Fig. 5 ist nochmals der Eckbereich des Behälters dargestellt, in dem sich die Längsschweißnaht 26 und die Querschweißnaht 30 überlagern. In Fig. 6 ist eine Ansicht dieses Eckbereiches des Deckelverschlusses von unten gezeigt, wobei in der Querschweißnaht 30 eine Einkerbung 36 vorgesehen ist. Fig. 7 zeigt eine Stirnansicht des Behälters, bei dem zunächst lediglich das ohne Einkerbung ausgebildete Ende der Querschweißnaht 30 auf den Behälterkörper zurückgefaltet ist. In der Darstellung gemäß Fig. 8 ist der Behälter 10 in der endgültigen Form gezeigt, in der er zur Lagerung bzw. Versendung bereitgestellt wird.

Bei dieser zweiten Ausführungsform des Behälters bilden die am deckelseitigen Ende vorgesehene nichtüberlappende Querschweißnaht 30 und die überlappende Längsschweißnaht 26 eine zusammenhängende, im wesentlichen in einer Ebene liegende Naht (vgl. Fig. 5). Die Längsschweißnaht 26 ist hierbei stirnseitig mittig gefaltet, so daß sie einen verstärkten Abschnitt der Querschweißnaht 30 bildet. In diesem Eckbereich liegt somit die eine Hälfte der Längsschweißnaht 26 auf der einen Seite und die andere Hälfte dieser Naht auf der entgegengesetzten Seite des Behälters 10. Wie aus der Darstellung rechts unten in Fig. 5 deutlich erkennbar ist, weist der Eckbereich dieses Deckelverschlusses des Behälters somit eine Stärke auf, die der vierfachen Stärke der normalen Behälterwandung entspricht.

In einem der beiden Endbereiche der Querschweißnaht 30 ist in der Nähe der angrenzenden Längsschweißnaht 26 eine Einkerbung 36 vorgesehen, die sich im wesentlichen über die halbe Breite dieser Querschweißnaht erstreckt und als Einreißhilfe dient (vgl. insbesondere Fig. 6).

Wie aus Fig. 7 hervorgeht, wird zunächst das ohne Einkerbung ausgebildete Ende bzw. Ohr der Querschweißnaht 30 auf die betreffende Stirnfläche 44 des Behälters zurückgefaltet und durch einen Kleber 38 sowie ein sich quer zur Querschweißnaht 30 erstreckendes Band 40 besonders gesichert. Anschließend wird das die Einkerbung 36 aufweisende Ende bzw. Ohr der Querschweißnaht 30 auf die Stirnfläche 44 zurückgefaltet und an dieser anliegend mittels des die Aufreißhilfe 34 aufweisenden Bandes 32 an dieser Stirnfläche festgelegt (vgl. Fig. 8).

Das ohne Einreißhilfe ausgebildete, auf die Stirnfläche 44 zurückgefaltete Ende der Querschweißnaht 30 ist somit zusätzlich und unabhängig von dem Band 32, das das mit der Einreißhilfe bzw. Einkerbung 36 versehene Ende festlegt, an der Stirnfläche fixiert.

Während das Band 40 zur zusätzlichen Fixierung des ohne Einreißhilfe ausgebildeten Endes der Querschweißnaht 30 sich quer zu dieser Querschweißnaht erstreckt, verläuft das obere Band 32 parallel und längs dieser Querschweißnaht jedes der beiden Bänder 32, 40 ist jeweils von einer Seitenfläche über die Stirnfläche 44 und zur gegenüberliegenden Seitenfläche geführt.

Der Boden dieses Behälters kann wiederum gleich ausgeführt sein, wie dies im Zusammenhang mit der Ausführungsvariante gemäß Fig. 1, 3 und 4 beschrieben wurde.

Zum Öffnen des Behälters wird nun das Band 32 mittels der Aufreißhilfe 34 zumindest so weit abgezogen, bis sich das mit der Einkerbung 36 versehene Ende bzw. Ohr der Querschweißnaht infolge des Behälterinnendrucks aufrichtet. Auch dann, wenn dieses Band 32 weiter bzw. vollständig abgezogen wird, verbleibt das durch die Klebstelle 38 sowie das Band 40 besonders gesicherte andere Ohr der Querschweißnaht 30 an der Stirnfläche 44 anliegend festgelegt. Dadurch wird verhindert, daß sich die Querschweißnaht 30 vollständig aufrichtet und mit einem lauten Knall plötzlich öffnet.

Danach wird der hochstehende, die Einkerbung 36 aufweisende Zipfel der Querschweißnaht 30 angefaßt und entlang der Längsschweißnaht 26 zur Bodenseite hin gezogen. Nach dem Einreißen der Kerbe durch Ziehen am betreffenden Ohr der Querschweißnaht 30 und dem langsamen und relativ lautlosen Enthüften des Behälters kann dann durch Weiterziehen am Ohr der Behälter somit geöffnet werden, da er dabei an beiden Seiten der Längsnaht ähnlich wie bei einer Sollbruchstelle aufreißt. Nachdem der Behälter in voller Länge geöffnet ist, können die Bälle problemlos entnommen werden.

Durch die auf die Stirnfläche 44 zurückgefalteten Enden der Querschweißnaht 30 ist unter anderem auch sichergestellt, daß die Enden dieser Querschweißnaht durch die Bänder 32, 40 stets zuverlässig gegen die Stirnfläche 44 gehalten werden und eine vorzeitige Ablösung dieser Klebebänder durch die Eigenspannung der Enden bzw. Ohren dieser Querschweißnaht nicht auftreten kann.

**Patentansprüche**

1. Behälter zur druckdichten und unter Überdruck erfolgenden Verpackung von Tennisbällen und dergleichen,
   dadurch gekennzeichnet,
   daß die Verpackung aus einer zumindest im wesentlichen der Form der zu verpackenden Tennisbälle angepaßten und über Schweißnähte (26, 28, 30) verschlossenen Mehrschichtfolie (12) besteht, die wenigstens eine Schicht (14) aus gasundurchlässigem Material und wenigstens eine Schicht (16, 18) mit einer zumindest dem Behälterinnendruck standhaltenden Festigkeit umfaßt, daß die die Behälterinnenfläche und die Behälteraußenfläche bildenden Schichten (20, 22) schweißbar sind, und daß wenigstens ein Teil der Schweißnähte (26, 28, 30) ohne Überlappung durch Verschweißen der Behälterinnenflächen gebildet ist und diese nicht überlappenden Schweißnähte (28, 30) auf den Behälterkörper (44) zurückgefaltet und am Behälterkörper anliegend festgelegt sind.

2. Behälter nach Anspruch 1, dadurch gekennzeichnet, daß zwischen den die Behälterinnenfläche und die Behälteraußenfläche bildenden schweißbaren Schichten (20, 22) die gasundurchlässige Schicht (14) und wenigstens eine zumindest dem Behälterinnendruck standhaltende Festigkeit aufweisende weitere Schicht (16, 18) vorgesehen ist.

3. Behälter nach einem oder mehreren der vorhergehenden Ansprüche, dadurch gekennzeichnet, daß eine mittlere Schicht der Mehrschichtfolie (12) durch die Schicht (14) aus gasundurchlässigem Material gebildet und zu beiden Seiten dieser gasundurchlässigen Schicht (14) jeweils eine der Schichten (16, 18) mit einer zumindest dem Behälterinnendruck standhaltenden Festigkeit angeordnet ist.

4. Behälter nach einem oder mehreren der vorhergehenden Ansprüche, dadurch gekennzeichnet, daß die gasundurchlässige Schicht (14) der Mehrschichtfolie (12) aus Aluminium besteht.

5. Behälter nach einem oder mehreren der vorhergehenden Ansprüche, dadurch gekennzeichnet, daß die Schichten (16, 18) mit einer zumindest dem Behälterinnendruck standhaltenden Festigkeit aus Polyester bestehen.

6. Behälter nach einem oder mehreren der vorhergehenden Ansprüche, dadurch gekennzeichnet, daß die schweißbaren Schichten (20, 22) der Mehrschichtfolie (12) Schichten sind, die den Schweißnähten (26, 28, 30) bereits bei einer Temperatur, die geringfügig unterhalb der für das Schweißen erforderlichen Erweichungstemperatur liegt, eine hohe Festigkeit verleihen.

7. Behälter nach einem oder mehreren der vorhergehenden Ansprüche, dadurch gekennzeichnet, daß die schweißbaren Schichten (20, 22) der Mehrschichtfolie (12) aus Polyäthylen bestehen.

8. Behälter nach einem der Ansprüche 1 - 6, dadurch gekennzeichnet, daß die schweißbaren Schichten (20, 22) der Mehrschichtfolie (12) aus Polypropylen bestehen.

9. Behälter nach einem oder mehreren der vorhergehenden Ansprüche, dadurch gekennzeichnet, daß die auf dem Behälterkörper (44) zurückgefalteten, nichtüberlappenden Schweißnähte durch wenigstens ein Band (32) oder einen Klebestreifen festgelegt sind.

10. Behälter nach einem oder mehreren der vorhergehenden Ansprüche, dadurch gekennzeichnet, daß der Behälter (10) durch wenigstens eine Längsschweißnaht (26) und an den beiden Enden jeweils durch eine Querschweißnaht (28, 30) verschlossen ist und daß die durch Verschweißen der Behälterinnenflächen gebildeten, keine Überlappung aufweisenden Querschweißnähte auf dem Behälterkörper zurückgefaltet und durch ein Band (32), einen Klebestreifen oder dergleichen festgelegt sind.

11. Behälter nach Anspruch 10, dadurch gekennzeichnet, daß die Längsschweißnaht (26) eine überlappende Naht ist, die durch Verschweißen der Behälterinnenfläche mit der Behälteraußenfläche gebildet ist und daß die Querschweißnähte ohne Überlappung durch Verschweißen der Behälterinnenflächen gebildet, auf den Behälterkörper zurückgefaltet und durch das Band (32), einen Klebestreifen oder dergleichen festgelegt sind.

12. Behälter nach einem oder mehreren der vorhergehenden Ansprüche, dadurch gekennzeichnet, daß die Schweißnähte (26, 28, 30) derart angeordnet sind, daß sie eine zusammenhängende Naht bilden.

13. Behälter nach einem der Ansprüche 9 - 11, dadurch gekennzeichnet, daß das Band (32) in Richtung der nichtüberlappenden und zurückgefalteten Schweißnähte (28, 30) auf dem Behälterkörper angebracht ist und zumindest diese nichtüberlappenden Schweißnähte vollständig überdeckt.

14. Behälter nach einem der Ansprüche 9 - 11, dadurch gekennzeichnet, daß das Band (32) in Richtung der nichtüberlappenden und zurückgefalteten Schweißnähte (28, 30) zumindest im wesentlichen um den ganzen Behälterkörper gewickelt ist.

15. Behälter nach einem der Ansprüche 9 - 11, 13, 14, dadurch gekennzeichnet, daß das Band (32) zum Öffnen des Behälters (10) eine Aufreißhilfe (34) aufweist.

16. Behälter nach einem der Ansprüche 9 - 11, 13 - 15, dadurch gekennzeichnet, daß die durch Verschweißen der Behälterinnenflächen gebildeten nichtüberlappenden Schweißnähte (28, 30) jeweils derart ausgelegt sind, daß sie dem Behälterinnendruck jeweils nur mit Unterstützung des Bandes (32) standhalten und sich bei Abzug des Bandes ohne weitere Manipulation öffnen.

17. Behälter nach einem oder mehreren der vorhergehenden Ansprüche, bei dem wenigstens eine der nichtüberlappenden Querschweißnähte (28, 30) und zumindest eine überlappende Längsschweißnaht (26) eine zusammenhängende, zumindest im wesentlichen in einer Ebene liegende Naht bilden, dadurch gekennzeichnet, daß in dieser Querschweißnaht (30) wenigstens eine vorzugsweise im Bereich einer angrenzenden Längsschweißnaht angeordnete Einreißhilfe vorgesehen ist, die insbesondere aus einer Materialschwächung oder Einkerbung (36) besteht, die sich vorzugsweise über die halbe Breite der Querschweißnaht erstreckt.

18. Behälter nach Anspruch 17, dadurch gekennzeichnet, daß die beiden Enden zumindest der die Einreißhilfe aufweisenden Querschweißnaht (30) auf die betreffende Stirnfläche (44) des länglichen Behälters (10) zurückgefaltet und an diesem anliegend festgelegt sind.

19. Behälter nach Anspruch 17 oder 18, dadurch gekennzeichnet, daß die Längsschweißnaht (26) stirnseitig mittig gefaltet ist und einen verstärkten Abschnitt der Querschweißnaht (30) bildet.

20. Behälter nach einem der Ansprüche 9 - 11 und 13 - 15 und nach Anspruch 18 oder 19, dadurch gekennzeichnet, daß das ohne Einreißhilfe ausgebildete, auf die Stirnfläche (44) zurückgefaltete Ende der Querschweißnaht (30) zusätzlich und unabhängig von dem Band (32) an der Stirnfläche festgelegt ist, das das mit der Einreißhilfe (36) versehene Ende festlegt.

21. Behälter nach Anspruch 20, dadurch gekennzeichnet, daß das ohne Einreißhilfe ausgebildete Ende der Querschweißnaht (30) durch Verschweißung, einen Kleber und/oder ein weiteres, insbesondere sich quer zur Querschweißnaht (30) erstreckendes Band (40) an der Stirnfläche (44) des Behälters (10) festgelegt ist.

22. Behälter nach Anspruch 21 oder 22, dadurch gekennzeichnet, daß sich das Band (32), das das mit der Einreißhilfe versehene Ende der Querschweißnaht (30) an der Stirnfläche (44) festlegt, längs der Querschweißnaht über die gesamte Stirnfläche und zumindest teilweise längs wenigstens einer der beiden Seiten des Behälters erstreckt.

**Claims**

1. Container for the pressure-tight packaging under excess pressure of tennis balls and the like,
   characterized in that
   the package comprises a multiple layer foil (12) which is at least substantially adapted to the shape of the tennis balls to be packaged and is closed by weld seams (26, 29, 30), with the multiple layer foil including at least one layer (14) of a gas impermeable material and at least one layer (16, 18) with a strength which at least withstands the internal pressure of the container; in that the layers (20, 22) forming the container inner surface and the container outer surface are weldable; and in that at least a part of the weld seams (26, 28, 30) is formed without overlapping by welding of the container inner surfaces, with these non-overlapping weld seams (28, 30) being folded back onto the body of the container (44) and being secured to the container body in contact therewith.

2. Container in accordance with claim 1, characterized in that between the weldable layers (20, 22) forming the container inner surface and the container outer surface there is provided the gas impermeable layer (14) and at least one further layer (16, 18) having a strength which at least withstands the internal pressure in the container.

3. Container in accordance with one or more of the preceding claims, characterized in that a middle layer of the multiple layer foil (12) is formed by the layer (14) of gas impermeable material and that on both sides of this gas impermeable layer (14) there is respectively arranged one of the layers (16, 18) with a strength which at least withstands the internal pressure in the container.

4. Container in accordance with one or more of the preceding claims, characterized in that the gas impermeable layer (14) of the multiple layer foil (12) consists of aluminum.

5. Container in accordance with one or more of the preceding claims, characterized in that the layers (16, 18) with a strength which at least withstands the internal pressure in the container consist of polyester.

6. Container in accordance with one or more of the preceding claims, characterized in that the weldable layers (20, 22) of the multiple layer foil (12) are layers which already provide the weld seams (26, 28, 30) with a high strength at a temperature which lies fractionally below the softening temperature required for the welding.

7. Container in accordance with one or more of the preceding claims, characterized in that the weldable layers (20, 22) of the multiple layer foil (12) consist of polyethylene.

8. Container in accordance with one of the claims 1 - 6, characterized in that the weldable layers (20, 22) of the multiple layer foil (12) consist of polypropylene.

9. Container in accordance with one or more of the preceding claims, characterized in that the non-overlapping weld seams which are folded back onto the body of the container (44) are secured by at least one band (32) or one adhesive strip.

10. Container in accordance with one or more of the preceding claims, characterized in that the container (10) is closed by at least one longitudinal weld seam (26) and at both ends by a respective transverse weld seam (28, 30); and in that the transverse weld seams which do not exhibit any overlap and are formed by welding of the container inner surfaces are folded back onto the container body and are secured by a band (32), by an adhesive strip or the like.

11. Container in accordance with claim 10, characterized in that the longitudinal weld seam (26) is an overlapping seam which is formed by welding of the container inner surface with the container outer surface; and in that the transverse weld seams so formed without overlap by welding the container inner surfaces are folded back onto the container body and are secured by the band (32), by an adhesive strip or the like.

12. Container in accordance with one or more of the preceding claims, characterized in that the weld seams (26, 28, 30) are arranged so that they form a connected seam.

13. Container in accordance with one of the claims 9 - 11, characterized in that the band (32) is applied to the container body in the direction of the non-overlapping and folded back weld seams (28, 30) and at least fully covers these non-overlapping weld seams.

14. Container in accordance with one of the claims 9 - 11, characterized in that the band (32) is wound at least substantially around the entire container body in the direction of the non-overlapping and folded back weld seams (28, 30).

15. Container in accordance with one of the claims 9 - 11, 13, 14, characterized in that the band (32) is provided with a tearing aid (34) for the opening of the container (10).

16. Container in accordance with one of the claims 9 - 11, 13 - 15, characterized in that the non-overlapping weld seams (28, 30) formed by welding of the container inner surfaces are each so laid out that they each only withstand the internal pressure in the container with the assistance of the band (32) and open without further manipulation on pulling off the band.

17. Container in accordance with one or more of the preceding claims, in which at least one of the non-overlapping transverse weld seams (28, 30) and at least one overlapping longitudinal weld seam (26) form a continuous seam lying at least substantially in one plane, characterized in that at least one tearing aid is provided in this transverse weld seam (30) and is preferably arranged in the region of an adjoining longitudinal weld seam, with this tearing aid in particular consisting of a material weakening or notch (36) which preferably extends over half the width of the transverse weld seam.

18. Container in accordance with claim 17, characterized in that the two ends of at least the transverse weld seam (30) having the tearing aid are folded back onto the relevant end faces (44) of the elongate container (10) and are secured to the latter in contact therewith.

19. Container in accordance with claim 17 or 18, characterized in that the longitudinal weld seam (26) is folded in the middle at the end face and forms a reinforced portion of the transverse weld seam (30).

20. Container in accordance with one of the claims 9 to 11 and 13 to 15, and in accordance with claim 18 or 19, characterized in that the end of the transverse weld seam (30) which is formed without the tearing aid and which is folded back onto the end surface (44) is additionally secured to the end surface independently of the band (32) which secures the end provided with the tearing aid (36).

21. Container in accordance with claim 20, characterized in that the end of the transverse weld seam (30) formed without the tearing aid is secured by welding, by an adhesive and/or by a further band, in particular a band extending transverse to the transverse weld seam (30), to the end face (44) of the container (10).

22. Container in accordance with claim 21 or claim 22, characterized in that the band (32) which secures the end of the transverse weld seam (30) provided with the tearing aid to the end surface (44) extends along the transverse weld seam over the entire end face and at least partially along at least one of the two sides of the container.


**Revendications**

1. Récipient pour l'emballage étanche à la pression et sous surpression de balles de tennis et analogues, caractérisé en ce que l'emballage est constitué d'une feuille multicouche (12) adaptée au moins sensiblement à la forme des balles de tennis à emballer et fermée par des joints soudés (26, 28, 30), laquelle feuille renferme au moins une couche (14) en matière imperméable aux gaz et au moins une couche (16, 18) résistant au moins à la pression interne du récipient, en ce que les couches (20, 22) constituant la surface intérieure du récipient et la surface extérieure du récipient sont soudables, et en ce qu'au moins une partie des joints soudés (26, 28, 30) est formée sans recouvrement par soudage des surfaces intérieures du récipient et que ces joints soudés (28, 30) ne se recouvrant pas sont repliés sur le corps (44) du récipient et fixés au corps du récipient en étant contigus.

2. Récipient selon la revendication 1, caractérisé en ce qu'il est prévu, entre les couches soudables (20, 22) constituant la surface intérieure du récipient et la surface extérieure du récipient, la couche (14) imperméable aux gaz et au moins une autre couche (16, 18) résistant au moins à la pression interne du récipient.

3. Récipient selon l'une ou plusieurs des revendications précédentes, caractérisé en ce qu'une couche médiane de la feuille multicouche (12) est formée de la couche (14) en matière imperméable aux gaz et en ce qu'il est disposé, sur chacune des deux faces de cette couche (14) imperméable aux gaz, l'une des couches (16, 18) résistant au moins à la pression interne du récipient.

4. Récipient selon l'une ou plusieurs des revendications précédentes, caractérisé en ce que la couche (14) imperméable aux gaz de la feuille multicouche (12) est constituée d'aluminium.

5. Récipient selon l'une ou plusieurs des revendications précédentes, caractérisé en ce que les couches (16, 18) résistant au moins à la pression interne du récipient sont constituées de polyester.

6. Récipient selon l'une ou plusieurs des revendications précédentes, caractérisé en ce que les couches soudables (20, 22) de la feuille multicouche (12) sont des couches qui confèrent une résistance élevée aux joints soudés (26, 28, 30) dès une température légèrement inférieure à la température de ramollissement nécessaire au soudage.

7. Récipient selon l'une ou plusieurs des revendications précédentes, caractérisé en ce que les couches soudables (20, 22) de la feuille multicouche (12) sont constituées de polyéthylène.

8. Récipient selon l'une des revendications 1 à 6, caractérisé en ce que les couches soudables (20, 22) de la feuille multicouche (12) sont constituées de polypropylène.

9. Récipient selon l'une ou plusieurs des revendications précédentes, caractérisé en ce que les joints soudés ne se recouvrant pas, repliés sur le corps (44) du récipient, sont fixés par au moins une bande (32) ou un ruban adhésif.

10. Récipient selon l'une ou plusieurs des revendications précédentes, caractérisé en ce que le récipient (10) est fermé par au moins un joint soudé longitudinal (26) et par un joint soudé transversal (28, 30) à chacune des deux extrémités, et en ce que les joints soudés transversaux, ne présentant pas de recouvrement et formés par soudage des surfaces intérieures du récipient, sont repliés sur le corps du récipient et sont fixés par une bande (32), un ruban adhésif ou analogues.

11. Récipient selon la revendication 10, caractérisé en ce que le joint soudé longitudinal (26) est un joint à recouvrement qui est formé par soudage des surfaces intérieures du récipient avec la surface extérieure du récipient, et en ce que les joints soudés transversaux sans recouvrement sont formés par soudage des surfaces intérieures du récipient, repliés sur le corps du récipient et fixés par la bande (32), un ruban adhésif ou analogue.

12. Récipient selon une ou plusieurs des revendications précédentes, caractérisé en ce que les joints soudés (26, 28, 30) sont disposés de manière qu'ils forment un joint ininterrompu.

13. Récipient selon l'une des revendications 9 à 11, caractérisé en ce que la bande (32) est appliquée sur le corps du récipient dans la direction des joints soudés (28, 30) ne se recouvrant pas et repliés et recouvre complètement au moins ces joints soudés ne se recouvrant pas.

14. Récipient selon l'une des revendications 9 à 11, caractérisé en ce que la bande (32) est enroulée au moins sensiblement autour du corps entier du récipient, dans la direction des joints soudés (28, 30) ne se recouvrant pas et repliés.

15. Récipient selon l'une des revendications 9 à 11, 13, 14, caractérisé en ce que la bande (32) présente un moyen (34) d'arrachement pour l'ouverture du récipient (10).

16. Récipient selon l'une des revendications 9 à 11, 13 à 15, caractérisé en ce que les joints soudés (28, 30) ne se recouvrant pas, formés par soudage des surfaces intérieures du récipient, sont conçus chacun de manière à résister à la pression interne du récipient uniquement à l'aide de la bande (32) et à s'ouvrir par enlèvement de la bande sans autre manipulation.

17. Récipient selon une ou plusieurs des revendications précédentes, dans lequel au moins l'un des joints soudés transversaux non recouvrants (28, 30) et au moins un joint soudé longitudinal à recouvrement (26) constituent une soudure ininterrompue s'étendant au moins sensiblement dans un plan, caractérisé en ce qu'il est prévu dans ce joint soudé transversal (30) au moins un moyen de déchirement, de préférence dans la zone d'un joint soudé longitudinal adjacent, lequel moyen de déchirement est constitué en particulier d'un affaiblissement de la matière ou d'une entaille (36) qui s'étend de préférence sur la moitié de la largeur du joint soudé transversal.

18. Récipient selon la revendication 17, caractérisé en ce que les deux extrémités au moins du joint soudé transversal (30) présentant le moyen de déchirement sont repliées sur la surface en bout correspondante (44) du récipient allongé (10) et sont fixées sur celui-ci en étant contiguës.

19. Récipient selon la revendication 17 ou 18, caractérisé en ce que le joint soudé longitudinal (26) est plié sur lui-même vers le bout et constitue un tronçon renforcé du joint soudé transversal (30).

20. Récipient selon l'une des revendications 9 à 11 et 13 à 15 et selon la revendication 18 ou 19, caractérisé en ce que l'extrémité du joint soudé transversal (30), formée sans moyen de déchirement et repliée sur la surface en bout (44), est en outre fixée sur la surface en bout, indépendamment de la bande (32) qui fixe l'extrémité sur laquelle est prévu le moyen (36) de déchirement.

21. Récipient selon la revendication 20, caractérisé en ce que l'extrémité du joint soudé transversal (30) formée sans moyen de déchirement est fixée par soudage, par un adhésif et/ou par une autre bande (40), qui s'étend en particulier en travers du joint soudé transversal (30), sur la surface en bout (44) du récipient (10).

22. Récipient selon la revendication 21 ou 22, caractérisé en ce que la bande (32), qui fixe, sur la surface en bout (44), l'extrémité du joint soudé transversal (30) sur laquelle est prévu le moyen de déchirement, s'étend le long du joint soudé transversal, sur toute la surface en bout et au moins partiellement le long d'au moins l'un des deux côtés du récipient.

# FIG. 1

# FIG. 2

# FIG. 3

# FIG. 4

# FIG. 8

FIG. 5

FIG. 6

FIG. 7